# EUROPEAN PATENT SPECIFICATION

(11) **EP 1 600 327 B1**
(45) Date of publication and mention of the grant of the patent: **07.05.2008**
(21) Application number: 05104401.4
(22) Date of filing: 24.05.2005
(51) Int. Cl.: B60P 1/38, B65G 1/10, B62B 3/00

(54) **Trolley and/or stacker/unstacker and method for the operation thereof**
Transportwagen und/oder Regalwagen, und Verfahren zu dessen Betrieb
Chariot et/ou véhicule d'emmagasinage, et méthode pour l'opération de ce chariot

(30) Priority: 24.05.2004 NL 1026253
(43) Date of publication of application: 30.11.2005
(73) Proprietor: Jarini Beheer B.V., 2678 SR De Lier (NL)
(72) Inventor: Scheffers, Hendricus, 2678 SR De Lier (NL)
(74) Representative: van Westenbrugge, Andries

(56) References cited:
- EP-A- 0 863 044
- BE-A- 1 010 991
- CH-A- 641 415
- CH-A- 676 700
- US-A- 5 215 427

## Description

The present invention relates to a system comprising a trolley for plants arranged in containers as well as said containers, wherein said trolley has a base with at least three wheels fixed thereto, four vertical uprights extending from said base, between which uprights carriers for plants are accommodated at at least two levels, wherein horizontal guides extend between said uprights and wherein said carriers are removably linked to said guides such that these carriers can be removed horizontally from the trolley and replaced therein.

A system of this type is generally known in the state of the art. For a trolley reference is made to CH 641 415. This publication discloses a trolley with a number of supports for placing carriers thereon. The carriers consist of a tubular frame, on which the bottoms of the containers bear.

For the carriers provided with openings reference is made to BE 1010991 A4. In this publication carriers are described consisting of planks provided with openings joined to one another via a section 9. The interior space of these sections 9 is suitable for accommodating the forks of a fork-lift trolley. In this way plants can be traded by the carrier.

The aim of the present invention is to provide a system as described above by means of which it is possible in a simple manner to combine containers and carriers with one another and to separate them from one another. Here containers are understood to be pots, trays and the like, which can contain one or more plants.

This aim is achieved with a system as described above in that said carriers are each provided with a number of openings for accommodating said containers therein, wherein said carriers and containers are embodied so that in a transport position the top of said containers is gripped in said openings and in a release position, where said containers bear on a base, said containers are free of said openings.

Using the construction described above it is possible to combine and to separate carriers and plants in a simple manner. During transport the containers will be gripped in the openings.

The various aspects will be developed in more detail below with reference to the eventual setting out of plants in a cultivation area. It must be understood that the operations described below can also be carried out in the reverse sequence.

The removal of carriers from the trolley can be carried out in a particularly simple manner using a stacker/unstacker. This is a construction consisting of a frame with grab means arranged thereon. These grab means can be moved both vertically and horizontally. By placing the trolley against the unstacker it is possible to make the grab means engage on the carrier and more particularly grab members arranged thereon. By this means it is possible to remove the carriers from the trolley in the manner described above by movement in the horizontal direction. Once the carrier concerned is in the stacker/unstacker this can move in the vertical direction. For unloading this is preferably always moved to the same vertical position. This position can be the highest position but is preferably the lowest position of the unstacker.

According to a particular embodiment of the invention the carriers are provided with openings for containers, the tops of the containers coming into contact with the rim of the openings. These openings can have any conceivable shape. The containers can, for example, be made conical or provided with a peripheral rim. The major part of the containers extends downwards through the openings. If the containers move downwards with the carriers, when the containers protrude below the carrier and the base of the stacker/unstacker is reached each container independently will start to be supported by the base when the carrier is lowered further. As a result the containers are freed from the carrier. It is then possible to grasp the containers, for example using a fork-like construction, and to pick up a large number of containers simultaneously between the prongs of the fork, to lift these and remove them from the stacker/unstacker and move them to a cultivation area located close by. With another embodiment of the openings it is also possible to remove the carriers from the containers without handling the containers further.

The stacker/unstacker can be embodied to be stationary or mobile. Movement can be carried out using a fork, preferably with a fork-lift trolley or other construction. It is also possible to place the plants further apart or to bring them closer together by means of a particular embodiment of the fork construction. By adapting the pattern of holes in the carrier it is possible to replace the plants in the carrier afterwards.

It will be understood that instead of the opening in the carrier any other construction can be used for carrying and positioning containers. For instance, there can be depressions, rims and the like that engage on the bottom of the containers, where sufficient room remains for engagement between the containers using forks or similar constructions and moving the containers in such a way.

By means of the present invention it is possible to unload a trolley and optionally load it again very rapidly. The stacker/unstacker can optionally be designed such that it operates automatically after start-up. That is to say this automatically seeks the relevant carrier in the trolley, removes this from the trolley and brings it into a lowered position on the base of the stacker/unstacker. The fork-lift trolley operator can then, for example, take action immediately. In this way the next carrier can be positioned in the stacker/unstacker during the operation for transporting the containers from the stacker/unstacker to the cultivation area. It has even proved possible to work with two fork-lift trolleys simultaneously without the speed of the stacker/unstacker leading to waiting times.

In this way manual movement of containers is no longer necessary and full mechanisation is possible.

The invention also relates to an assembly comprising the system described above, wherein said stacker/unstacker comprises a frame with a base, grab means that can be moved vertically in said frame, which grab means are also able to move horizontally for grasping a specific carrier in said trolley in a specific position, horizontally moving this out of said trolley into said stacker/unstacker and vertically moving said carrier downwards in said stacker/unstacker as far as the base thereof and vice versa.

The invention also relates to a method for bringing plants arranged in containers into a cultivation area or removing them from a cultivation area, comprising placing said containers in an opening of a carrier provided with openings, placing at least two carriers above one another in a trolley, transporting said trolley to a location close to said cultivation area, transferring a carrier from said trolley to a stacker/unstacker and moving said carrier vertically into a release/pick-up position and removing said containers from said carrier, wherein placing said containers in said openings comprises grasping said containers at the top and the removal comprises moving said carrier and containers towards a base surface in such a way that the top of said containers comes away from said carrier.

The invention will be explained in more detail below with reference to an illustrative embodiment shown in the drawing. In the drawing:
Fig. 1 shows, diagrammatically in perspective, a trolley according to the invention;
Fig. 2 shows a stacker/unstacker according to the invention;
Figs 3a/f show, diagrammatically, the unloading of a trolley as far as placing pots on a cultivation base.

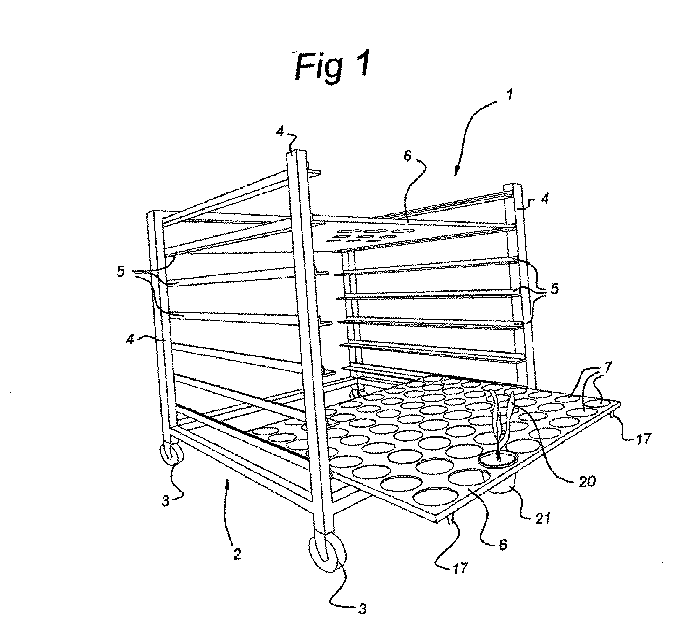

In Fig. 1 a trolley according to the invention is indicated by 1. This consists of a base 2 from which four uprights extend vertically. The base 2 is provided with wheels 3 on the underside, by means of which the trolley can easily be moved. There are plant carriers 6. In contrast to the prior art, these are not permanently fixed to the uprights 4. These are accommodated in guides 5 which are permanently fixed to the uprights 4. There are openings 7 in the plant carriers 6 for accommodating containers 21 with plants 20. Openings 7 are sized such that the bottom of such a container of conical construction easily passes through them but the somewhat protruding peripheral rim of container 21 comes to bear on the top rim of the opening.

Each carrier 6 is provided with a grab member 17.

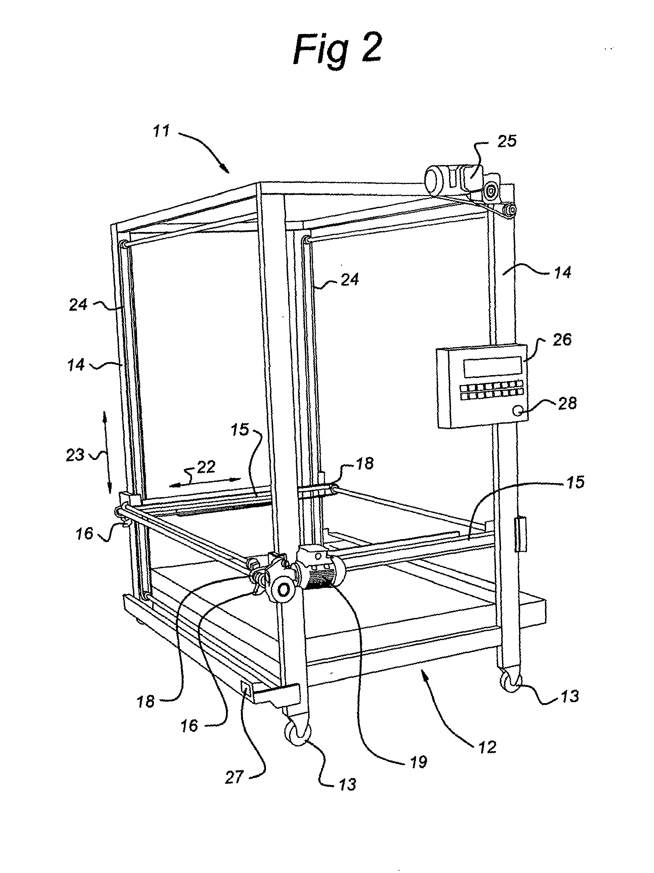

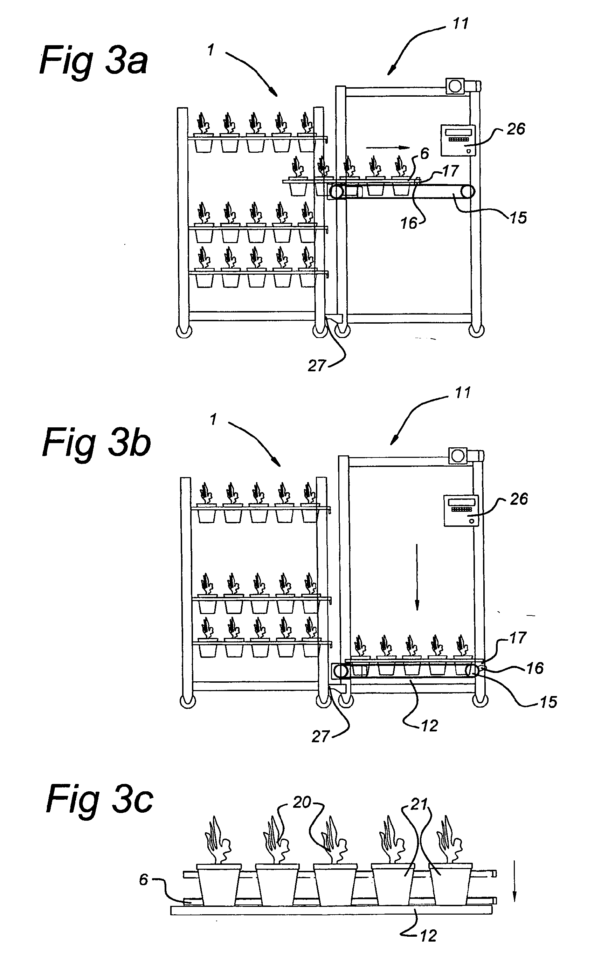

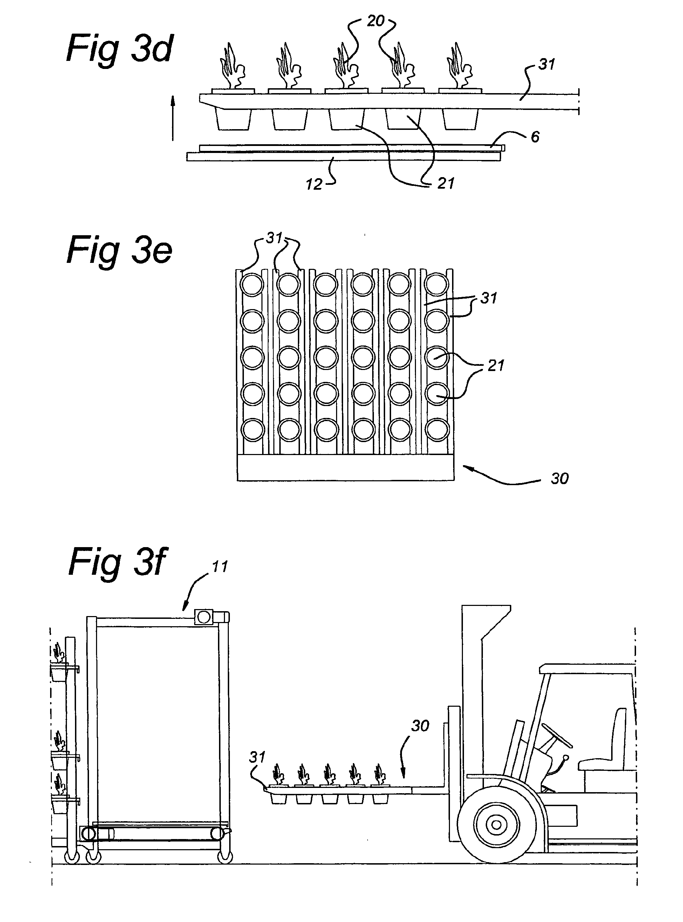

In Fig. 2 a stacker/unstacker is indicated in its entirety by 11. This consists of a base 12 provided with four wheels 13. Four uprights are indicated by 14. There are two support rails 15 located opposite one another. These can move up and down as a pair in the direction of arrow 23. This up and down movement is achieved by means of drive chain 24 and motor 25. Grab pins or grab means 16 that can move back and forth in the horizontal plane in the direction of arrow 22 are on the support rails 15. Back and forth movement takes place with a chain 18 and a motor 19. Control of motor 19 and motor 25 is effected with controller 26 that can be activated by switch 27 and/or switch 28. Using this stacker/unstacker it is possible to grab a carrier 6. This is shown diagrammatically in Fig. 3. In a first step (Fig. 3a) the trolley 1 and stacker/unstacker 11 are placed against one another. Controller 26 is then activated by activating switch 27. This controller has been programmed to bring the support rails 15 opposite a desired carrier in trolley 1 that is to be removed. The grab pins 16 are then moved behind pins 17. When the pins 16 are transported further in the upper part of the path, these will take the carrier 6 concerned with them so that this is transferred from trolley 1 to stacker/unstacker. This is shown in Fig. 3a. As soon as the carrier is completely inside the stacker/unstacker 11, the carrier 6 concerned is lowered by moving the set of support rails 15 downwards. This is shown in Fig. 3b. Ultimately the protruding part of the containers 21 will come into contact with the base 12 of the stacker/unstacker. On further downward movement of the support rails 15, and thus the carrier 6, the top rim of the pots 21 will come away from the opening 7 in the carrier concerned. This is shown in Fig. 3c.

A fork is then provided as shown in Fig. 3d. This is indicated in its entirety by 30 and has prongs 31 between which gaps are delimited. This fork can be inserted in the space between adjacent pots. The distance between the prongs 31 is greater than the width of the pots at the location of the carrier in the situation shown in Fig. 3c but is smaller than the external diameter of the peripheral rim. As a result the fork slides along the pots at the bottom (Fig. 3e). By then raising the fork 30 the pots are subsequently supported by the fork and by moving it out of the stacker/unstacker the pots can be moved out of the stacker/unstacker (Fig. 3f). The fork, which can be fixed by some means or other to a fork-lift trolley or other transport means, can then be moved to the desired cultivation base. By setting down the containers thereon the fork can be withdrawn in a low position without the containers.

It will be understood that the above process can be carried out in the reverse sequence, that is to say a trolley can be loaded by this means.

The procedure described above can be fully automated. That is to say with software in the stacker/unstacker the level in the trolley 1 at which a plant carrier 6 is located or the level at which a plant carrier filled with plants is located is recorded. The support rails are then brought to the level concerned in an automatically controlled manner for removal of the plant carrier.

The same automated feature can be used when replacing plant carriers. As a result operating personnel present can concentrate on other tasks. In principle it is possible to let unstacking proceed completely automatically, as a result of which only placing a series of plants in the cultivation area has to be carried out with the aid of transport means controlled by a person.

If other plants have to be positioned, adjustments can be made by simply changing the carriers 6 and, in particular, the pattern of holes.

A different plant carrier is needed for each type of container. In order to avoid this problem it is possible to delimit the openings only by two rails or the like located some distance apart. The containers are confined in these at the sides. Larger or smaller containers can be accommodated by varying the distance between the rails. What is important is that the position of the rails is fixed. To this end it is possible according to the present invention to make the rails engage close to the free ends thereof in openings or the like that have been made in the peripheral frame of the carrier. Such openings can optionally be made in exchangeable sections. As a result it is possible to provide different distances between the rails based on a set consisting of a number of rails and specific exchangeable sections in combination with a single carrier frame. Other variants are also conceivable.

It is also possible to place plants further apart by means of the present invention.

The operation described above can be carried out mechanically. It is possible to move large quantities of pots of other containers with plants therein at the same time. Furthermore, it is ensured that the plants are always protected against external influences.

In principle it is possible to construct the carrier in such a way that the carrier can be removed without moving the plants. The variant described above with a rail-like construction can be embodied such that a fork-like construction is produced, as a result of which the carrier can be pushed away after the containers have come to bear on a base surface. This base surface can be the cultivation area concerned.

Using the present invention it is possible to provide containers with plants in one business (potting-up business) and to let the plants grow in another business (nursery). As a result there will no longer be the excess burden in the other business that is associated with putting plants in pots. It must be understood that putting plants in pots can also be carried out in the same business as the nursery, but in a logistically different area.

After reading the above description variants that are obvious and fall within the scope of appended claims will be immediately apparent to those skilled in the art.

## Claims

1. System comprising a trolley (1) for plants (20) arranged in containers as well as said containers, wherein said trolley has a base (2) with at least three wheels (3) fixed thereto, four vertical uprights (4) extending from said base, between which uprights carriers (6) for plants are accommodated at at least two levels, wherein horizontal guides (5) extend between said uprights and wherein said carriers are removably linked to said guides such that these carriers can be removed horizontally from the trolley and replaced therein, wherein said carriers are each provided with a number of openings (7) for accommodating said containers therein, and at each level a single carrier is provided, each carrier having openings extending in the two horizontal directions, **characterized in that** said carriers and containers are embodied so that in a transport position the top of said containers is gripped in said openings and in a release position, where said containers bear on a base, said containers are free of said openings.

2. System according to Claim 1 wherein said carriers (6) are provided with grab members (17) for coupling with grab means (16) for the horizontal movement thereof.

3. System according to one of the preceding claims, wherein said carriers are each provided with a number of openings (7) for accommodating said containers therein.

4. Assembly comprising a system comprising a trolley (1) for plants (20) arranged in containers as well as said containers, wherein said trolley has a base (2) with at least three wheels (3) fixed thereto, four vertical uprights (4) extending from said base, between which uprights carriers (6) for plants are accommodated at at least two levels, wherein horizontal guides (5) extend between said uprights and wherein said carriers are removably linked to said guides such that these carriers can be removed horizontally from the trolley and replaced therein, wherein said carriers are each provided with a number of openings (7) for accommodating said containers therein, **characterized in that** said carriers and containers are embodied so that in a transport position the top of said containers is gripped in said openings and in a release position, where said containers bear on a base, said containers are free of said openings, a stacker/unstacker (11), wherein said stacker/unstacker comprises a frame with a base (12), grab means (16) that can be moved vertically in said frame, which grab means are also able to move horizontally for grasping a specific carrier in said trolley in a specific position, horizontally moving this out of said trolley into said stacker/unstacker and vertically moving said carrier in said stacker/unstacker as far as the base (12) thereof and vice versa, and removal means (31) for remaining the containers from the stacker/unstacker and move them to a cultivation area close by.

5. Assembly according to Claim 4, having a motor (25) for moving said grab means vertically.

6. Combination according to Claim 4 or 5, having a motor (19) for moving said grab means horizontally.

7. Method for bringing plants arranged in containers into a cultivation area or removing them from a cultivation area, comprising placing said containers in an opening of a carrier provided with openings, placing at least two carriers above one another in a trolley, transporting said trolley to a location close to said cultivation area, transferring a carrier from said trolley to a stacker/unstacker and moving said carrier vertically into a release/pick-up position and removing said containers from said carrier, **characterised in that** placing said containers in said openings comprises grasping said containers at the top and the removal comprises moving said carrier and containers towards a base surface in such a way that the top of said containers comes away from said carrier.

8. Method according to Claim 7, wherein when the top of the containers comes away from the carrier a fork-like construction (3) is moved horizontally over said carrier and raised, grasping said containers between the prongs (31) of said fork, and vice versa.

9. Method according to Claim 8, wherein the fork-like construction with said containers is moved to a cultivation location, wherein said containers are placed on a cultivation base when said fork-like construction is moved away and vice versa.

## Patentansprüche

1. System, umfassend einen Transportwagen (1) für Pflanzen (20), die in Behältern angeordnet sind, sowie die Behälter, wobei der Transportwagen eine Basis (2) mit mindestens drei daran befestigten Rädern (3) aufweist, wobei sich vier vertikale Stützen (4) von der Basis erstrecken, zwischen denen Stützträger (6) für Pflanzen auf mindestens zwei Ebenen angeordnet sind, wobei horizontale Führungen (5) zwischen den Stützen verlaufen und wobei die Träger mit den Führungen entfernbar verbunden sind, so dass diese Träger horizontal von dem Transportwagen entfernt und darin ersetzt werden können, wobei die Träger jeweils mit einer Anzahl von Öffnungen (7) versehen sind, um die Behälter darin aufzunehmen, und auf jeder Ebene ein einziger Träger bereitgestellt ist, wobei jeder Träger Öffnungen aufweist, welche in die zwei horizontalen Richtungen verlaufen,
**dadurch gekennzeichnet**
**dass** die Träger und Behälter derart gestaltet sind, dass die Oberseite der Behälter in einer Transportposition in den Öffnungen gefasst ist und in einer Löseposition, in der die Behälter auf einer Basis gelagert sind, die Behälter frei von den Öffnungen sind.

2. System nach Anspruch 1, wobei die Träger (6) mit Greifelementen (17) zum Koppeln mit Greifmitteln (16) für die horizontale Bewegung davon bereitgestellt sind.

3. System nach einem der vorhergehenden Ansprüche, wobei die Träger jeweils mit einer Anzahl von Öffnungen (7) zum Aufnehmen der Behälter darin bereitgestellt sind.

4. Anordnung, umfassend ein System, umfassend einen Transportwagen (1) für Pflanzen (20), die in Behältern angeordnet sind, sowie die Behälter, wobei der Transportwagen eine Basis (2) mit mindestens drei daran befestigten Rädern (3) aufweist, wobei sich vier vertikale Stützen (4) von der Basis erstrecken, zwischen denen Stützträger (6) auf mindestens zwei Ebenen angeordnet sind, wobei horizontale Führungen (5) zwischen den Stützen verlaufen und wobei die Träger mit den Führungen lösbar verbunden sind, so dass diese Träger von dem Transportwagen horizontal entfernt und darin ersetzt werden können, wobei die Träger jeweils mit einer Anzahl von Öffnungen (7) versehen sind, um die Behälter darin aufzunehmen,
**dadurch gekennzeichnet**
**dass** die Träger und Behälter derart gestaltet sind, dass die Oberseite der Behälter in einer Transportposition in den Öffnungen gefasst wird und die Behälter in einer Löseposition, in der die Träger auf einer Basis gelagert sind, frei von den Öffnungen sind, einen Regalwagen (11), wobei der Regalwagen ein Gestell mit einer Basis (12) umfasst, Greifmittel (16), die vertikal in dem Gestell bewegt werden können, wobei sich die Greifmittel auch horizontal bewegen können, um einen bestimmten Träger in dem Transportwagen in eine bestimmte Position zu bewegen, wobei dieser horizontal aus dem Transportwagen in einen Regalwagen bewegt wird und der Träger in dem Regalwagen vertikal bis zu der Basis (12) davon und umgekehrt bewegt wird, und Entfernungsmittel (31), um die Behälter von dem Regalwagen zu entfernen und sie zu einer nahe gelegenen Anbaufläche zu befördern.

5. Anordnung nach Anspruch 4 mit einem Motor (25) zum vertikalen Bewegen der Greifmittel.

6. Kombination nach Anspruch 4 oder 5 mit einem Motor (19) zum horizontalen Bewegen der Greifmittel.

7. Verfahren zum Befördern von Pflanzen, die in Behältern angeordnet sind, zu einer Anbaufläche oder Entfernen von einer Anbaufläche, umfassend das Anordnen der Behälter in einer Öffnung eines Trägers, der mit Öffnungen versehen ist, Anordnen von mindestens zwei Trägern übereinander in einem Transportwagen, Transportieren des Transportwagens zu einer Stelle in der Nähe der Anbaufläche, Umladen eines Trägers von dem Transportwagen auf einen Regalwagen und vertikales Bewegen des Trägers in eine Löse-/Aufnahmeposition und Entfernen der Behälter von dem Träger,
**dadurch gekennzeichnet**
**dass** das Anordnen der Behälter in den Öffnungen das Fassen der Behälter an der Oberseite umfasst und die Entfernung das Bewegen der Träger und Behälter zu einer Basisoberfläche umfasst, so dass die Oberseite der Behälter von dem Träger entfernt wird.

8. Verfahren nach Anspruch 7, wobei, wenn die Oberseite der Behälter von dem Träger entfernt wird, eine gabelähnliche Konstruktion (3) horizontal über den Träger bewegt und angehoben wird, wobei die Behälter zwischen den Zinken (31) der Gabel gefasst werden, und umgekehrt.

9. Verfahren nach Anspruch 8, wobei die gabelähnliche Konstruktion mit den Behältern zu einer Anbaufläche befördert wird, wobei die Behälter auf einer Anbaubasis angeordnet werden, wenn die gabelähnliche Konstruktion weg bewegt wird und umgekehrt.

## Revendications

1. Système comprenant un chariot (1) pour des plantes (20) disposées dans des contenants ainsi que lesdits contenants, où ledit chariot possède une base (2) avec au moins trois roues (3) fixées à celle-ci, quatre montants verticaux (4) s'étendant depuis ladite base, entre lesquels des porte-montants (6) pour des plantes sont logés à au moins deux niveaux, où des guides horizontaux (5) s'étendent entre lesdits montants, et où lesdits supports sont reliés amoviblement auxdits guides de telle sorte que ces supports peuvent être retirés horizontalement du chariot et replacés dans celui-ci, où lesdits supports présentent chacun un nombre d'ouvertures (7) pour recevoir lesdits contenants dans ceux-ci, et à chaque niveau, un seul support est prévu, chaque support ayant des ouvertures s'étendant dans les deux directions horizontales, **caractérisé en ce que** lesdits supports et contenants sont réalisés de telle sorte qu'en position de transport, le dessus desdits contenants est pris dans lesdites ouvertures et, dans une position de relâchement, où lesdits contenants reposent sur une base, lesdits contenants sont dégagés desdites ouvertures.

2. Système selon la revendication 1, où lesdits supports (6) présentent des éléments de griffe (17) pour le couplage à des moyens de griffe (16) en vue de leur mouvement horizontal.

3. Système selon l'une des revendications précédentes, où lesdits supports présentent chacun un nombre d'ouvertures (7) pour loger lesdits contenants dans celles-ci.

4. Ensemble comprenant un système comprenant un chariot (1) pour des plantes (20) agencées dans des contenants ainsi que lesdits contenants, où ledit chariot possède une base (2) avec au moins trois roues (3) fixées à celle-ci, quatre montants verticaux (4) s'étendant à partir de ladite base, entre lesquels des supports verticaux (6) pour des plantes sont logés à au moins deux niveaux, où des guides horizontaux (5) s'étendent entre lesdits montants, et où lesdits supports sont reliés amoviblement auxdits guides de telle sorte que ces supports peuvent être retirés horizontalement du chariot et replacés dans celui-ci, où lesdits supports présentent chacun un nombre d'ouvertures (7) pour recevoir lesdits contenants dans celles-ci, **caractérisé en ce que** lesdits supports et contenants sont réalisés de telle sorte qu'en position de transport, le dessus desdits contenants est pris dans lesdites ouvertures et, dans une position de relâchement, où lesdits contenants reposent sur une base, lesdits contenants sont dégagés desdites ouvertures, un organe d'empilage/de désempilage (11), où ledit organe d'empilage/désempilage comprend un châssis avec une base (12), des moyens de griffe (16) qui peuvent être déplacés verticalement dans ledit châssis, lesdits moyens de griffe sont également aptes à se déplacer horizontalement pour saisir un support spécifique dans ledit chariot dans une position spécifique, en déplaçant horizontalement celui-ci dudit chariot dans ledit organe d'empilage/désempilage et en déplaçant verticalement ledit support dans ledit organe d'empilage/désempilage jusqu'à la base (12) de celui-ci et vice versa, et des moyens de retrait (31) pour retirer les contenants dudit organe d'empilage/désempilage et pour les amener à une zone de culture à proximité.

5. Ensemble selon la revendication 4, comportant un moteur (25) pour déplacer lesdits moyens de griffe verticalement.

6. Combinaison selon la revendication 4 ou 5, comportant un moteur (19) pour déplacer lesdits moyens de griffe horizontalement.

7. Procédé pour amener des plantes agencées dans des contenants dans une zone de culture ou pour les retirer d'une zone de culture, comprenant les étapes consistant à placer lesdits contenants dans une ouverture d'un support munie d'ouvertures, placer au moins deux supports l'un au-dessus de l'autre dans un chariot, transporter ledit chariot à un emplacement proche de ladite zone de culture, transférer un support dudit chariot à un organe d'empilage/désempilage et amener ledit support verticalement dans une position de relâchement/ramassage et retirer lesdits contenants dudit support, **caractérisé en ce que** le placement desdits contenants dans lesdites ouvertures comprend la saisie desdits contenants en haut, et le retrait comprend le déplacement desdits supports et contenants vers une surface de base de telle manière que le dessus desdits contenants s'éloigne dudit support.

8. Procédé selon la revendication 7, où lorsque le dessus des contenants s'éloigne du support, une construction semblable à une fourche (3) est déplacée horizontalement sur ledit support et est relevée, en saisissant lesdits contenants entre les dents (31) de ladite fourche, et vice versa.

9. Procédé selon la revendication 8, où la construction semblable à une fourche avec lesdits contenants est amenée à un emplacement de culture, où lesdits contenants sont placés sur une base de culture lorsque ladite construction semblable à une fourche est éloignée et vice versa.
